(19)

Europäisches
Patentamt
European
Patent Office
Office européen
des brevets

(11)     **EP 2 651 663 B1**

(12)                                    **EUROPEAN PATENT SPECIFICATION**

(45) Date of publication and mention
of the grant of the patent:
**25.02.2015  Bulletin 2015/09**

(51) Int Cl.:
***B60C 15/04*** *(2006.01)*          ***B60C 15/06*** *(2006.01)*
***B60C 15/00*** *(2006.01)*

(21) Application number: **11794155.9**

(86) International application number:
**PCT/EP2011/072326**

(22) Date of filing: **09.12.2011**

(87) International publication number:
**WO 2012/080121 (21.06.2012 Gazette 2012/25)**

(54) **TYRE WITH IMPROVED BEADS**

REIFEN MIT VERBESSERTEN WULSTEN

TYRE WITH IMPROVED BEADS.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2010  FR 1060494
16.03.2011  US 201161453476 P**

(43) Date of publication of application:
**23.10.2013  Bulletin 2013/43**

(73) Proprietors:
• **Compagnie Générale des Etablissements
Michelin
63000 Clermont-Ferrand (FR)**
• **MICHELIN Recherche et Technique S.A.
1763 Granges-Paccot (CH)**

(72) Inventors:
• **BRUNEAU, François-Xavier
F-63040 Clermont-Ferrand cedex 9 (FR)**
• **BOURGEOIS, Frédéric
F-63040 Clermont-Ferrand cedex 9 (FR)**

(74) Representative: **Sidhu, Alban et al
MFP Michelin
Cer Ladoux-F35-DGD/PI
23, place des Carmes-Déchaux
63040 Clermont-Ferrand Cedex 9 (FR)**

(56) References cited:
**WO-A1-2010/072736**

EP 2 651 663 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to passenger vehicle tyres with a load index above 100, like most tyres designed to be fitted to vehicles of the "4 x 4" type.

BACKGROUND

The load index of a tyre is a parameter well known to those skilled in the art. It quantifies the maximum load that a tyre is able to bear when mounted on a mounting rim and inflated to service pressure. A load index of 100 corresponds to a maximum load of 800 kg.
Most passenger vehicle tyres comprise:

- two beads designed to come into contact with a mounting rim, each bead comprising at least one annular reinforcing structure;

- two sidewalls extending the beads radially outwards, the two sidewalls meeting in a crown comprising a crown reinforcement surmounted by a tread;

- at least one carcass reinforcement extending from the beads through the sidewalls as far as the crown, the carcass reinforcement comprising a plurality of carcass reinforcing elements and being anchored in the two beads by being wrapped around the annular reinforcing structure so as to form, within each bead, a main portion and a wrapped-around portion;

- a bead filler situated radially on the outside of the annular reinforcing structure and at least partially between the main portion and the wrapped-around portion of the carcass reinforcement, and

- an outer strip positioned axially on the outside of the carcass reinforcement and of the bead filler.

Recently, there have been proposals to improve the rolling resistance of passenger vehicle tyres by optimizing the beads thereof. Document WO 2010/072736 notably teaches the use of special rubber compounds. The outer strip and possibly the bead filler are made using rubber compounds that have an elastic modulus G' less than or equal to 15 MPa and a viscous modulus G" such that:

$$G'' \text{ [MPa]} \leq 0.2 \cdot G' \text{ [MPa]} - 0.2 \text{ MPa,}$$

the elastic and viscous moduli being measured at 23° C.
That document also recommends further reducing the rolling resistance by optimizing the geometry of that or those portions of the tyre that have these moduli. In particular, the portion of rubber compound having an elastic modulus G' less than or equal to 15 MPa and a viscous modulus G" such that:

$$G'' \text{ [MPa]} \leq 0.2 \cdot G' \text{ [MPa]} - 0.2 \text{ MPa,}$$

has, in any radial cross section, a thickness E(r), this thickness corresponding to the length of the intersection of the direction perpendicular to the main portion of the carcass reinforcement with the portion of rubber composition, r denoting the distance separating the intersection of the direction perpendicular to the main portion of the carcass reinforcement from the radially innermost point of the annular reinforcing structure. The thickness E(r) changes as a function of the distance r such that, in the range of distances r comprised between 20 and 50 mm, the variation in thickness $\dfrac{\partial E(r)}{\partial r}$ is less than or equal to - 0.25 mm/mm (and preferably less than or equal to -0.3 mm/mm) over at least 5 mm. In other words, it is advantageous to ensure that the entity formed by the bead filler and the outer strip is "squat", that is to say shorter and wider than in conventional tyres.
When implementing this teaching in tyres designed to be fitted to vehicles of the "4 x 4" type that have a *load*

*index* above 100, i.e. tyres which traditionally have had very stiff (above of 50 MPa) bead fillers, it has been found that the incorporation of thick outer strips presents a problem of industrial robustness. Because the quantities of rubber compound involved are fairly great, it is difficult to prevent rubber from moving while the tyres are being cured. As a result, the proportion of tyres that fail to meet the specifications increases significantly.

SUMMARY OF THE INVENTION

One of the objects of the present invention is to provide a tyre with a high load index that has low rolling resistance and high cornering stiffness without, as a result, impairing industrial robustness.

This object is achieved by use of a wide annular reinforcing structure.

More specifically this object is achieved by a tyre comprising:

two beads designed to come into contact with a mounting rim, each bead comprising at least one annular reinforcing structure;

two sidewalls extending the beads radially outwards, the two sidewalls meeting in a crown comprising a crown reinforcement surmounted by a tread; and

at least one carcass reinforcement extending from the beads through the sidewalls as far as the crown, the carcass reinforcement comprising a plurality of carcass reinforcing elements and being anchored in the two beads by being wrapped around the annular reinforcing structure so as to form, within each bead, a main portion and a wrapped-around portion, each wrapped-around portion extending radially outwards as far as an end situated a radial distance DRR from the innermost point of the annular reinforcing structure of the bead, the radial distance DRR being greater than or equal to 7%, and less than or equal to 85% (and preferably greater than or equal to 10% and less than or equal to 20%), of the radial height H of the tyre,

Each bead comprises a bead filler, the bead filler being situated radially on the outside of the annular reinforcing structure and at least partially between the main portion and the wrapped-around portion of the carcass reinforcement, the bead filler extending radially outwards from the radially innermost point of the annular reinforcing structure of the bead as far as radial distance DRB from the innermost point, the radial distance DRB being less than or equal to 20% of the radial height H of the tyre. As is well known to those skilled in the art, it is appropriate to maintain a certain difference (typically 5 mm) between DRR and DRB in order to avoid a negative impact on the endurance of the tyre.

Each bead further comprises an outer strip positioned axially on the outside of the carcass reinforcement and of the bead filler, each outer strip extending between a radially inner end of the outer strip and a radially outer end of the outer strip, the radially inner end of the outer strip being situated at a distance DRI from the radially innermost point of the annular reinforcing structure of the bead, the radial distance DRI being less than or equal to 20% of the radial height H of the tyre, the radially outer end of the outer strip being situated at a distance DRL from the radially innermost point of the annular reinforcing structure of the bead, the radial distance DRL being greater than or equal to 25% (and preferably greater than or equal to 40%) and less than or equal to 50% (and preferably less than or equal to 45%) of the radial height H of the tyre.

The bead filler and the outer strip are made of a rubber compound that has an elastic modulus G' less than or equal to 15 MPa and a viscous modulus G" such that:

$$G'' \ [MPa] \leq 0.2 \cdot G' \ [MPa] - 0.2 \ MPa,$$

the elastic and viscous moduli being measured at 23° C.

The entity formed by the bead filler and the outer strip has a thickness E(r), this thickness corresponding to the length of the intersection of the direction perpendicular to the main portion of the carcass reinforcement with the entity, r denoting the distance separating the intersection of the direction perpendicular to the main portion of the carcass reinforcement from the radially innermost point of the annular reinforcing structure, the thickness E(r) changes as a function of the distance r such that, in the range of distances r comprised between 25 and 45% of the radial height H of the tyre, the variation in thickness $\dfrac{\partial E(r)}{\partial r}$ is less than or equal to - 0.25 mm/mm (and preferably less than or equal to - 0.3 mm/mm) over at least 4% of the height H of the tyre.

In one embodiment of the invention, the at least one annular reinforcing structure has a maximum axial width DE such that the ratio $\dfrac{E(r)_{max} - DE}{E(r)_{max}}$, in which $E(r)_{max}$ is the maximum value of the thickness $E(r)$, is less than or equal to 10% (and preferably less than or equal to 7%). Of course, when the at least one annular reinforcing structure is formed of a set of threads, it is the maximum axial width DE of the set that is considered.

BRIEF DESCRIPTION OF THE DRAWINGS

Figure 1 depicts a tyre according to the prior art.

Figure 2 depicts a partial perspective view of a tyre according to the prior art.

Figure 3 depicts, in radial section, one quarter of a tyre according to the prior art.

Figure 4 illustrates how the height H of the tyre is determined.

Figures 5 and 6 illustrate how the thickness of the entity formed by the bead filler and the outer strip is determined.

Figure 7 depicts, in radial section, a portion of a tyre according to an embodiment of the invention.

Figures 8 and 9 depict the thickness of the entity formed by the bead filler and the outer strip for a tyre according to an embodiment the invention.

DETAILED DESCRIPTION OF THE DRAWINGS

In the use of the term "radial" it is appropriate to make a distinction between several different uses that the person skilled in the art makes for this word. Firstly the expression refers to a radius of the tyre. It is in this sense that a point P1 is said to be "radially inside" a point P2 (or "radially on the inside of" the point P2) if it is closer to the axis of rotation of the tyre than is the point P2. Conversely, a point P3 is said to be "radially outside" a point P4 (or "radially on the outside of" the point P4) if it is further away from the axis of rotation of the tyre than is the point P4. Progress is said to be made "radially inwards (or outwards)" when progressing towards smaller (or larger) radii. Where radial distances are involved, it is this sense of the term that applies also.

By contrast, a thread or reinforcement is said to be "radial" when the thread or the reinforcing elements of the reinforcement make an angle greater than or equal to 80° and less than or equal to 90° with the circumferential direction. Let us specify that in this document, the term "thread" is to be understood in an entirely general sense and encompasses threads in the form of monofilaments, multifilaments, cords, folded yarns or equivalent assemblies, that being the case irrespective of the material of which the thread is made or the surface treatment it may have received to encourage it to bond to the rubber.

Finally, a "radial section" or "radial cross section" here means a section or cross section on a plane containing the axis of rotation of the tyre.

An "axial" direction is a direction parallel to the axis of rotation of the tyre. A point P5 is said to be "axially inside" a point P6 (or "axially on the inside of" the point P6) if it is closer to the median plane of the tyre than is the point P6. Conversely, a point P7 is said to be "axially outside" a point P8 (or "axially on the outside of" the point P8) if it is further away from the median plane of the tyre than is the point P8. The "median plane" of the tyre is the plane perpendicular to the axis of rotation of the tyre and which lies equidistant between the annular reinforcing structures of each bead.

A "circumferential" direction is a direction perpendicular both to a radius of the tyre and to the axial direction.

Within the context of this document, the expression "rubber compound" denotes a rubber compound containing at least an elastomer and a filler.

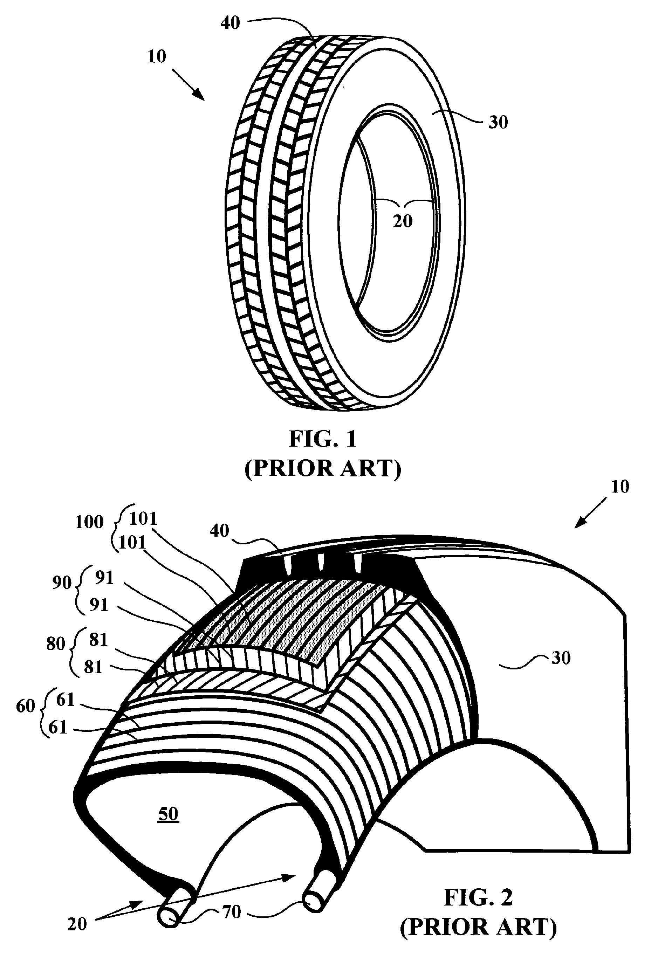

Figure 1 schematically depicts a tyre 10 according to the prior art. The tyre 10 comprises a crown comprising a crown reinforcement (not visible in Figure 1) surmounted by a tread 40, two sidewalls 30 extending the crown radially inwards, and two beads 20 radially on the inside of the sidewalls 30.

Figure 2 schematically depicts a partial perspective view of another tyre 10 according to the prior art and illustrates the various components of the tyre. The tyre 10 comprises a carcass reinforcement 60 consisting of threads 61 coated with rubber compound, and two beads 20 each comprising annular reinforcing structures 70 which hold the tyre 10 on the rim (not depicted). The carcass reinforcement 60 is anchored in each of the beads 20. The tyre 10 further comprises a crown reinforcement comprising two plies 80 and 90. Each of the plies 80 and 90 is reinforced by thread-like reinforcing elements 81 and 91 which are parallel within each layer and crossed from one layer to the other, making angles comprised between 10° and 70° with the circumferential direction. The tyre also comprises a hooping reinforcement 100, positioned radially on the outside of the crown reinforcement, this hooping reinforcement 100 being formed of reinforcing elements 101 directed circumferentially and wound in a spiral. A tread 40 is laid on the hooping reinforcement 100; it is this tread 40 which provides contact between the tyre 10 and the road. The tyre 10 depicted is a "tubeless" tyre: it comprises an "inner liner" 50 made of a rubber compound impervious to the inflating gas, covering the interior surface of the tyre.

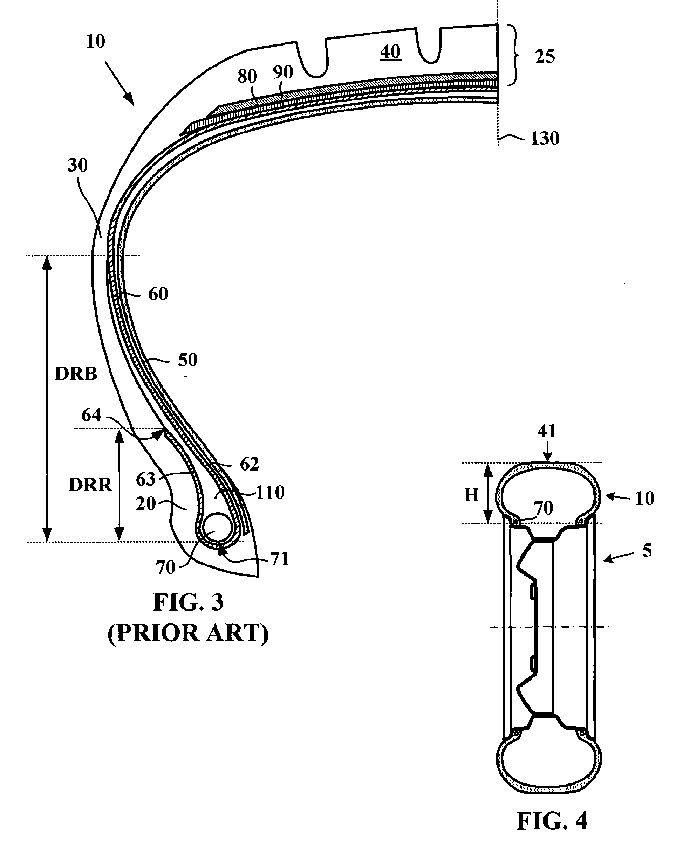

Figure 3 schematically depicts, in radial section, one quarter of a tyre 10 according to the prior art. The tyre 10 comprises two beads 20 designed to come into contact with a mounting rim (not depicted), each bead 20 comprising an annular reinforcing structure, in this instance a bead wire 70. Two sidewalls 30 extend the beads 20 radially outwards and meet in a crown 25 comprising a crown reinforcement formed of a first layer of reinforcements 80 and of a second layer of reinforcements 90 and surmounted radially by tread 40. Each layer of reinforcements comprises thread-like reinforcements coated in a matrix formed of rubber compound. The reinforcements in each layer of reinforcements are substantially mutually parallel; reinforcements in the two layers are crossed from one layer to the other at an angle of about 20°, as is well known to those skilled in the art for radial tyres.

The tyre 10 further comprises a carcass reinforcement 60 which extends from the beads 20 through the sidewalls 30 as far as the crown 25. This carcass reinforcement 60 here comprises thread-like reinforcements directed substantially radially, that is to say making an angle greater than or equal to 65° and less than or equal to 90° with the circumferential direction.

The carcass reinforcement 60 comprises a plurality of carcass reinforcing elements and is anchored in the two beads 20 by being wrapped around the bead wire 70, so as to form, in each bead, a main portion 62 and a wrapped-around portion 63. The wrapped-around portion extends radially outwards as far as an end 64 situated a radial distance DRR from the radially innermost point 71 of the annular reinforcing structure of the bead, the radial distance DRR here being equal to 22% of the radial height H of the tyre.

The "radial height" H of a tyre is defined as being the radial distance between the radially innermost point 71 of the annular reinforcing structure 70 of the bead 20 and the radially outermost point 41 (Figure 4) of the tread 40 when the tyre 10 is mounted on a mounting rim 5 (as has been depicted in Figure 4) and inflated to its service pressure.

Each bead comprises a bead filler 110, the bead filler being situated radially on the outside of the bead wire 70 and, at least partially, between the main portion 62 and the wrapped-around portion 63 of the carcass reinforcement 60.

The bead filler 110 extends radially outwards from the radially innermost point 71 of the annular reinforcement structure of the bead as far as a radial distance DRB from said point, the radial distance DRB being greater than or equal to 20% of the radial height H of the tyre. In this particular instance, the bead filler 110 extends as far as the equator of the tyre. What is meant, in the context of the present document, by the "equator" of the tyre is the radial height of the point of greatest axial extension of the carcass reinforcement. In a radial section through the tyre, the equator appears as the axial straight line passing through the points at which the carcass reinforcement has its greatest axial width when the tyre is mounted on the rim and inflated. When the carcass reinforcement reaches this greatest axial width at a number of points, it is the radial height of the point closest to the mid-height H/2 of the tyre that is considered to define the equator of the tyre. The equator thus defined should not be confused with the median plane 130 of the tyre which is also sometimes known as the "equator" in documents of the prior art.

The interior surface of the tyre 10 is covered with an inner liner 50.

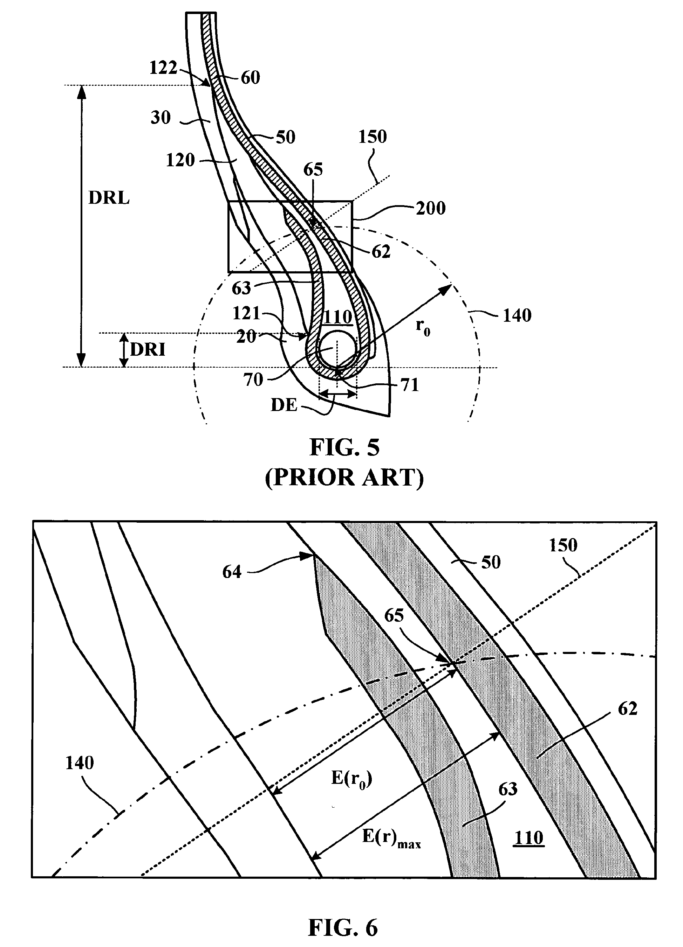

It is also known practice to provide an outer strip 120 placed axially on the outside of the carcass reinforcement and of the bead filler, as in the tyre depicted in Figure 5. Each outer strip 120 extends radially between a radially inner end 121 of the outer strip 120 and a radially outer end 122 of the outer strip 120. The radially inner end 121 of the outer strip 120 is situated a radial distance DRI from the radially innermost point 71 of the annular reinforcing structure 70 of the bead, DRI being less than or equal to 20% of the radial height H of the tyre. The radially outer end 122 of the outer strip 120 is situated a radial distance DRL from the radially innermost point 71 of the annular reinforcing structure 70 of the bead, the radial distance DRL being greater than or equal to 25% (and preferably greater than or equal to 40%) and less than or equal to 50% (and preferably less than or equal to 45%) of the radial height H of the tyre.

Traditionally, in order to form the bead filler 110 and the outer strip 120 use was made of rubber compounds that have an elastic modulus G' greater than or equal to 40 MPa and a viscous modulus G" comprised between 9 and 10 MPa.

In this document, the terms " elastic modulus G' " and " viscous modulus G" " denote dynamic properties well known to those skilled in the art. These properties are measured on a viscoanalyser of the Metravib VA4000 type on test specimens moulded from raw compounds or on test specimens bonded together from cured compounds. Test specimens such as those described in the standard ASTM D 5992 - 96 (the version published in September 2006 but initially approved in 1996) in Figure X2.1 (a circular method) are used. The diameter "d" of the test specimen is 10 mm (so the test specimen therefore has a circular cross section of 78.5 mm$^2$), the thickness "L" of each of the portions of rubber compound is 2 mm, giving a "d/L" ratio of 5 (in contrast with standard ISO 2856, mentioned at paragraph X2.4 of the ASTM standard, which recommends a d/L value of 2).

The response of a test specimen of vulcanized rubber compound subjected to a sinusoidal stress in alternating simple shear, at a frequency of 10 Hz and at a stabilized temperature of 23° is recorded. The test specimen is stressed symmetrically about its equilibrium position. The amplitude of deformation sweep ranges from 0.1% to 50% (on the outbound cycle), and then from 50% to 0.1% (on the return cycle). The result which is used is the dynamic shear elastic modulus (G') and the viscous shear modulus (G") at 10% deformation on the return cycle.

In order to reduce the rolling resistance, document WO 2010/072736 teaches the production of the outer strip, and possibly also of the bead filler, from a rubber compound that has an elastic modulus G' less than or equal to 15 MPa and a viscous modulus G" such that:

$$G'' \ [MPa] \leq 0.2 \cdot G' \ [MPa] - 0.2 \ MPa.$$

Table I gives two examples of such rubber compounds. The composition is given in phr ("per hundred rubber"), that is to say in part by weight per 100 parts by weight of rubber. The corresponding dynamic moduli are also indicated.

Table I

| Parts en phr | Compound 1 | Compound 2 |
|---|---|---|
|  |  |  |
| NR [1] | 100 | 100 |
| N 330 |  |  |
| N 990 | 85 | 85 |
| Graphite | 40 |  |
| Paraffin oil |  |  |
| Antioxidant (6PPD) [2] | 2 | 2 |
| Cobalt naphthenate | 3 | 3 |
| Stearic acid | 1 | 1 |
| ZnO | 7 | 7 |
| Formaphenol resin |  |  |
| Hardening agent |  |  |
| Sulphur | 7 | 7 |
| Accelerator (TBBS) [3] | 1 | 1 |
| G' | 5 | 2 |
| G" | 0.8 | 0.2 |
| Notes for Table 1:<br>[1] Natural rubber<br>[2] N-(1,3-dimethylbutyl)-N'-phenyl-p-phenylenediamine<br>[3] N-tert-butyl-2-benzothiazyl sulphonamide | | |

The rubber compound is preferably based on at least one diene elastomer, a reinforcing filler and a cross-linking system.

What is meant by a "diene" elastomer (interchangeable with rubber) is, in the known way, an elastomer derived at least in part (i.e. a homopolymer or a copolymer) from diene monomers, i.e. monomers which have two carbon-carbon double bonds, which may or may not be conjugated bonds. The diene elastomer used is preferably chosen from the group consisting of polybutadienes (BR), natural rubber (NR), synthetic polyisoprenes (I R), butadiene-styrene copolymers (SBR), isoprene-butadiene copolymers (BIR), isoprene styrene copolymers (SIR), butadiene-styrene-isoprene copolymers (SBIR) and compounds of these elastomers.

One preferred embodiment uses an "isoprene" elastomer, that is to say a homopolymer or a copolymer of isoprene, or in other words a diene elastomer chosen from the group consisting of natural rubber (NR), synthetic polyisoprenes (IR), the various copolymers of isoprene and compounds of these elastomers.

The isoprene elastomer is preferably natural rubber or synthetic polyisoprene of the cis-1,4 type. Of the synthetic polyisoprenes, those used for preference are polyisoprenes that have a ratio (molar %) of cis-1,4 bonds above 90%, more preferably still above 98%. According to other preferred embodiments, the diene elastomer may consist, fully or in part, of some other diene elastomer such as, for example, SBR elastomer (E-SBR or S-SBR) used either cut with some other elastomer, for example of the BR type, or uncut.

The rubber compound may also contain all or some of the additives customarily used in rubber matrices for the manufacture of tyres, such as, for example, reinforcing fillers such as carbon black or inorganic fillers such as silica, coupling agents for inorganic fillers, anti-aging agents, antioxidants, plasticizers or extension oils, whether the latter be of the aromatic or non-aromatic kind (notably oils that are very weakly aromatic or non-aromatic, for example of the napthene or paraffin type, with a high or preferably a low viscosity, MES or TDAE oils, plasticizing resins with a high Tg above 30°C), processability agents that make the compounds easier to process in the raw state, tackifying resins, a cross-linking system based either on sulphur or on sulphur donors, and/or on peroxide, accelerators, vulcanization activators or retarders, anti-reversion agents, methylene acceptors and donors such as HMT (hexamethylenetetramine) or H3M (hexamethoxymethylmelamine) for example, reinforcing resins (such as resorcinol or bismaleimide), known adhesion promoting systems of the metallic salts type for example, notably cobalt or nickel salts.

The compounds are manufactured in suitable mixing mills using two successive phases of preparation well known to those skilled in the art: a first phase of thermomechanical kneading or work (the so-called "non-productive" phase) carried out at high temperature, up to a maximum temperature comprised between 110°C and 190°C, preferably between 130°C and 180°C, followed by a second phase of mechanical work (the so-called "productive" phase) up to a lower temperature, typically below 110°C, during which finishing phase the cross-linking system is incorporated.

By way of example, the non-productive phase is carried out in a single thermomechanical step lasting a few minutes (for example between 2 and 10 min) during which all the basic components needed together with other additives with the exception of the cross-linking or vulcanizing system are introduced into an appropriate mixing mill such as a customary internal mixer. Once the compound thus obtained has cooled, the vulcanizing system is then incorporated in an external mixing mill such as an open mill kept at low temperature (for example between 30°C and 100°C). Everything is then kneaded (productive phase) for a few minutes (for example between 5 and 15 min).

The final compound thus obtained is then calendered, for example rolled into the form of a sheet or slab for characterizing, or alternatively is extruded to form the outer strip used in a tyre according to an embodiment the invention.

Vulcanizing (or curing) can then take place in the known manner at a temperature generally comprised between 130°C and 200°C, preferably under pressure, for a long enough length of time that may vary for example between 5 and 90 min notably according to the curing temperature, to the vulcanizing system adopted and to the vulcanizing dynamics of the compound in question.

The formulation of the rubber compound used for the bead filler may be identical to that of the rubber compound that forms the outer strip, with the exception of the addition of cobalt salts to encourage adhesion between the bead filler and the bead wire, as is well known to those skilled in the art.

Document WO 2010/072736 also teaches an advantageous bead geometry. Consider the thickness $E(r)$, in a radial cross section, of the entity formed by the bead filler and the outer strip. Figures 5 and 6 illustrate how the thickness $E(r)$ is determined. Figure 6 is an enlargement of the region contained in the box 200 in Figure 5. Tracking along the interface between the main portion 62 of the carcass reinforcement 60 and the bead filler 110, each point on this interface is a distance r from the radially innermost point 71 of the annular reinforcing structure 70. If there are several radially innermost points of the annular reinforcing structure, any one of these points is chosen to be the reference point. For a given distance $r_0$, the corresponding point 65 of the interface is found by plotting a circle 140 of radius $r_0$ around the radially innermost point 71 of the annular reinforcing structure 70, as has been depicted in Figure 5. Next, the direction 150 perpendicular to the main portion 62 of the carcass reinforcement 60 which passes through the point 65 of the interface is plotted. The thickness $E(r_0)$ corresponds to the length of the intersection of the direction 150 with the entity formed by the bead filler and the outer strip. The thickness of the wrapped-around portion 63, if the direction 150 intersects it, is disregarded.

Figure 6 also indicates the maximum thickness $E(r)_{max}$ of the entity formed by the bead filler and the outer strip.

The ratio $\dfrac{E(r)_{max} - DE}{E(r)_{max}}$, where DE is the maximum axial width of the bead wire 70 (see Figure 5), is equal to 18% in this instance.

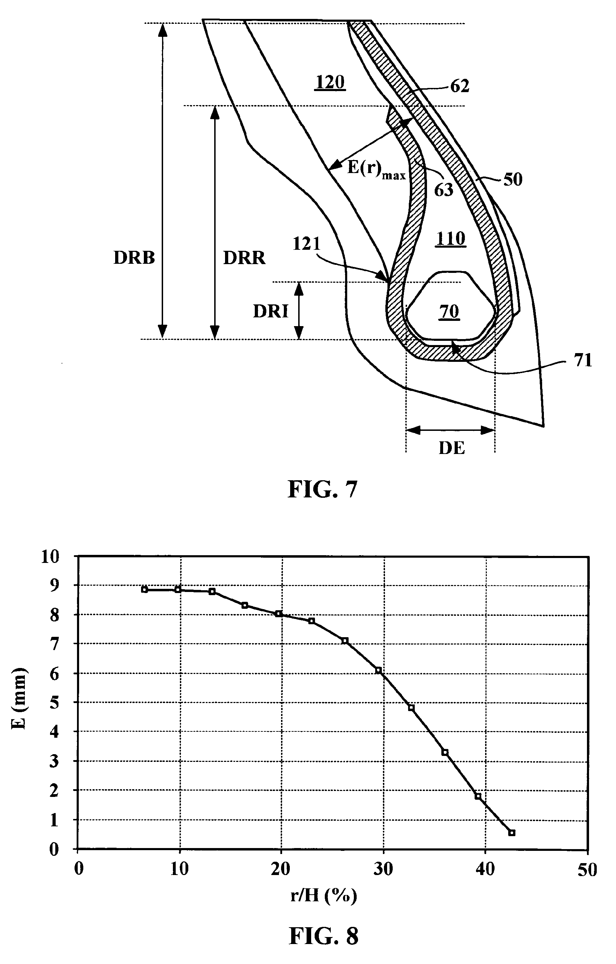

Figure 7 depicts, in radial section, a portion of a tyre according to an embodiment the invention. The bead differs from a tyre of the prior art in the axial width DE of the bead wire 70. This width is chosen such that the ratio

$$\frac{E(r)_{max} - DE}{E(r)_{max}}$$ is less than or equal to 10%. In this particular instance, the ratio is 9%. Further, the radial height DRR is equal to 13% of the radial height H of the tyre, and the radial height DRB is equal to 19% of the radial height H of the tyre.

The invention is not restricted to one particular type of bead wire. It can be implemented with braided bead wires, but can also be implemented with "bead bundles" using round wire (as disclosed, by way of example in document CA 2 026 024) or square wire (document US 3 949 800 represents one example of this), made up of an individual wire or strand coated with rubber, wound in a helix with contiguous turns stacked on one another, the plurality of superposed layers forming an endless reinforcing annulus of polygonal cross section. The use of bead wires like those disclosed in document WO 01/54929, and more particularly of 3-4-3-2 construction has proven to be particularly advantageous because it allows the wire to be sufficiently engineered without any unnecessary addition of mass.

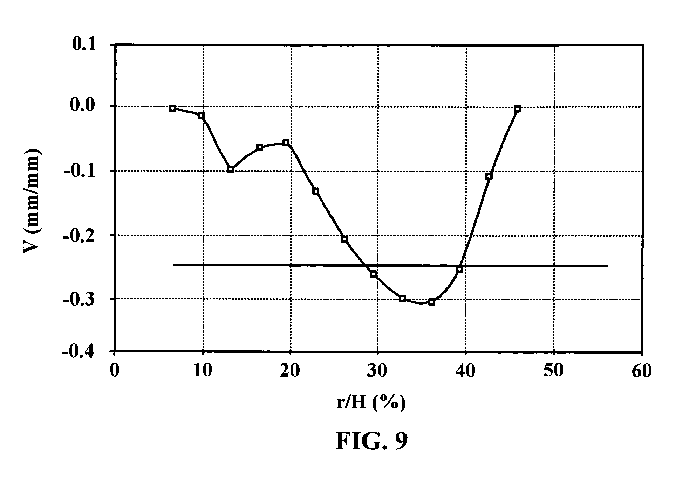

Figure 8 depicts the thickness E as a function of the distance r for the tyre depicted in Figure 7. The variation V in its thickness (i.e. the function $\frac{\partial E(r)}{\partial r}$) as a function of the radius r is depicted in Figure 9. It may be seen that the thickness E(r) changes as a function of the distance r such that, in the range of distances r comprised between 25 and 45% of the height H of the tyre, the variation in thickness $\frac{\partial E(r)}{\partial r}$ is less than or equal to - 0.25 mm/mm over approximately 11% of the height H of the tyre and equal to - 0.3 mm/mm over approximately 4% of the height H of the tyre.

The applicant has conducted comparative tests on tyres of 235/65 R 17 size. A tyre with a bead as depicted in Figure 5 was compared with a tyre with a bead as depicted in Figure 7. The two tyres had the same cornering stiffness but the rolling resistance of the tyre according to an embodiment the invention was 5% lower. More importantly still, the tyre according to an embodiment of the invention allowed an improvement in manufacturing productivity (number of compliant tyres produced per unit time) of around 15% over the tyre according to the prior art. No difference in terms of tyre endurance was noted.

**Claims**

1. Tyre comprising:

two beads (20) designed to come into contact with a mounting rim (5), each bead comprising at least one annular reinforcing structure (70);
two sidewalls (30) extending the beads radially outwards, the two sidewalls meeting in a crown comprising a crown reinforcement (80, 90, 100) surmounted by a tread (40);
at least one carcass reinforcement (60) extending from the beads through the sidewalls as far as the crown, the carcass reinforcement comprising a plurality of carcass reinforcing elements and being anchored in the two beads by being wrapped around the annular reinforcing structure so as to form, within each bead, a main portion (62) and a wrapped-around portion (63), each wrapped-around portion extending radially outwards as far as an end (64) situated a radial distance DRR from the innermost point (71) of the annular reinforcing structure of the bead, the radial distance DRR being greater than or equal to 7%, and less than or equal to 85%, of the radial height H of the tyre;
wherein each bead comprises a bead filler (110), the bead filler being situated radially on the outside of the annular reinforcing structure and at least partially between the main portion and the wrapped-around portion of the carcass reinforcement, the bead filler extending radially outwards from the radially innermost point (71) of the annular reinforcing structure of the bead as far as a radial distance DRB from the said point, the radial distance DRB being less than 20% of the radial height H of the tyre,
wherein each bead further comprises an outer strip (120) positioned axially on the outside of the carcass reinforcement and of the bead filler, each outer strip extending radially between a radially inner end (121) of the outer strip and a radially outer end (122) of the outer strip, the radially inner end (121) of the outer strip being situated at a distance DRI from the radially innermost point (71) of the annular reinforcing structure of the bead, the radial distance DRI being less than or equal to 20% of the radial height H of the tyre, the radially outer end (122) of the outer strip being situated at a distance DRL from the radially innermost point (71) of the annular reinforcing structure of the bead, the radial distance DRL being greater than or equal to 25% of the radial height H of the tyre,
wherein the bead filler (110) and the outer strip (120) are made of a rubber compound that has an elastic modulus G' less than or equal to 15 MPa and a viscous modulus G'' such that:

$$G'' \text{ [MPa]} \leq 0.2 \cdot G' \text{ [MPa]} - 0.2 \text{ MPa},$$

the elastic and viscous moduli being measured at 23° C;

wherein the entity formed by the bead filler (110) and the outer strip (120) has a thickness E(r), this thickness corresponding to the length of the intersection of the direction (150) perpendicular to the main portion (62) of the carcass reinforcement with said entity, r denoting the distance separating the intersection of said direction (150) perpendicular to the main portion (62) of the carcass reinforcement from the radially innermost point (71) of the annular reinforcing structure, the thickness E(r) changing as a function of the distance r such that, in the range of distances r comprised between 25 and 45% of the height H of the tyre, the variation in thickness

$$\frac{\partial E(r)}{\partial r}$$ is less than or equal to - 0.25 mm/mm over at least 4% of the height H of the tyre,

and wherein said at least one annular reinforcing structure has a maximum axial width DE such that the ratio

$$\frac{E(r)_{max} - DE}{E(r)_{max}},$$

where $E(r)_{max}$ is the maximum value of the thickness E(r), is less than or equal to 10%.

2. Tyre according to Claim 1, wherein the radial distance DRR is greater than or equal to 10% and less than or equal to 20% of the radial height H of the tyre.

3. Tyre according to Claim 1 or 2, wherein the radial distance DRL between the radially outer end (122) of the outer strip (120) and the radially innermost point (71) of the annular reinforcing structure (70) of the bead, is greater than or equal to 40% of the radial height H of the tyre.

4. Tyre according to any one of Claims 1 to 3, wherein the radial distance DRL between the radially outer end (122) of the outer strip (120) and the radially innermost point (71) of the annular reinforcing structure (70) of the bead, is less than or equal to 45% of the radial height H of the tyre.

5. Tyre according to any one of Claims 1 to 4, wherein, in the range of distances r comprised between 25 and 45% of the height H of the tyre, the variation in the thickness $\frac{\partial E(r)}{\partial r}$ is less than or equal to - 0.3 mm/mm over at least 4% of the height H of the tyre.

6. Tyre according to any one of Claims 1 to 5, wherein the ratio $\frac{E(r)_{max} - DE}{E(r)_{max}}$ is less than or equal to 7%.


**Patentansprüche**

1. Reifen, der Folgendes umfasst:

zwei Wulste (20), die entworfen sind, um mit einer Montagefelge (5) in Kontakt zu gelangen, wobei jeder Wulst wenigstens eine ringförmige Verstärkungsstruktur (70) aufweist;
zwei Seitenwände (30), die sich von den Wulsten radial auswärts erstrecken, wobei die zwei Seitenwände auf einen Laufstreifen treffen, der eine Laufstreifenverstärkung (80, 90, 100) aufweist, auf der eine Lauffläche (40) angebracht ist;
eine mindestens Karkassenverstärkung (60), die sich von den Wulsten durch die Seitenwände so weit wie der Laufstreifen erstreckt, wobei die Karkassenverstärkung mehrere Karkassenverstärkungselemente aufweist, und in den zwei Wulsten durch Wickeln um die ringförmige Verstärkungsstruktur verankert sind, um so in jedem Wulst einen Hauptabschnitt (62) und einen Umwickelungsabschnitt (63) zu bilden, wobei sich jeder Umwickelungsabschnitt radial auswärts so weit wie ein Ende (64) erstreckt, das sich in einem radialen Abstand DRR von dem innersten Punkt (71) der ringförmigen Verstärkungsstruktur des Wulstes befindet, wobei der radiale Abstand DRR größer als oder gleich 7 % und kleiner als oder gleich 85% der radialen Höhe H des Reifens ist; wobei jeder Wulst einen Wulstfüller (110) aufweist, wobei sich der Wulstfüller radial an der Außenseite der ringförmigen Verstärkungsstruktur und wenigstens teilweise zwischen dem Hauptabschnitt und dem Umwicklungsabschnitt der Karkassenverstärkung befindet, wobei sich der Wulstfüller radial auswärts von dem radial innersten Punkt (71) der ringförmigen Verstärkungsstruktur des Wulstes bis zu einem radialen Abstand DRB von diesem Punkt erstreckt, wobei der radiale Abstand DRB kleiner als 20 % der radialen Höhe H des Reifens ist, wobei jeder Wulst ferner einen äußeren Streifen (120) aufweist,

der axial an der Außenseite der Karkassenverstärkung und des Wulstfüllers positioniert ist, wobei sich jeder äußere Streifen radial zwischen einem radial inneren Ende (121) des äußeren Streifens und einem radial äußeren Ende (122) des äußeren Streifens erstreckt, wobei sich das radial innere Ende (121) des äußeren Streifens in einem Abstand DRI von dem radial innersten Punkt (71) der ringförmigen Verstärkungsstruktur des Wulstes befindet, wobei der radiale Abstand DRI kleiner als oder gleich 20% der radialen Höhe H des Reifens ist, wobei sich das radial äußere Ende (122) des äußeren Streifens in einem Abstand DRL von dem radial innersten Punkt (71) der ringförmigen Verstärkungsstruktur des Wulstes befindet, wobei der radiale Abstand DRL größer als oder gleich 25% der radialen Höhe H des Reifens ist,

wobei der Wulstfüller (110) und der äußere Streifen (120) aus einer Gummizusammensetzung hergestellt sind, die einen Elastizitätsmodul G' besitzt, der kleiner als oder gleich 15 MPa ist, und einen Viskositätsmodul G" besitzt, derart, dass:

$$G''[MPa] \leq 0,2 \times G'[MPa] - 0,2\ MPa$$

wobei der Elastizitätsmodul und der Viskositätsmodul bei 23 °C gemessen werden,

wobei die Gesamtheit, die durch den Wulstfüller (110) und den äußeren Streifen (120) gebildet ist, eine Dicke E (r) besitzt, wobei diese Dicke der Länge der Schnittlinie der Richtung (150) senkrecht zu dem Hauptabschnitt (62) der Karkassenverstärkung mit dieser Gesamtheit entspricht, wobei r den Abstand bezeichnet, der die Schnittlinie der Richtung (150) senkrecht zu dem Hauptabschnitt (62) der Karkassenverstärkung von dem radial innersten Punkt (71) der ringförmigen Verstärkungsstruktur trennt, wobei sich die Dicke E (r) in Abhängigkeit von dem Abstand r in der Weise ändert, dass im Bereich von Abständen r, die im Bereich von 25 bis 45% (er Höhe H des Reifens liegen, die Änderung der Dicke $\dfrac{\partial ET(r)}{\partial r}$ kleiner als oder gleich 0,25 mm/mm über wenigstens 4% der Höhe H des Reifens ist;

und wobei die wenigstens eine ringförmige Verstärkungsstruktur eine maximale axiale Breite DE besitzt, derart,

dass das Verhältnis $\dfrac{E(r)_{max} - DE}{E(r)_{max}}$ kleiner als oder gleich 10% ist, wobei $E(r)_{max}$ der Maximalwert der Dicke E(r) ist.

2. Reifen nach Anspruch 1, wobei der radiale Abstand DRR größer als oder gleich 10% und kleiner als oder gleich 20% der radialen Höhe H des Reifens ist.

3. Reifen nach Anspruch 1 oder 2, wobei der radiale Abstand DRL zwischen dem radial äußeren Ende (122) des äußeren Streifens (120) und dem radial innersten Punkt (71) der ringförmigen Verstärkungsstruktur (70) des Wulstes größer als oder gleich 40% der radialen Höhe H des Reifens ist.

4. Reifen nach einem der Ansprüche 1 bis 3, wobei der radiale Abstand DRL zwischen dem radial äußeren Ende (122) des äußeren Streifens (120) und dem radial innersten Punkt (71) der ringförmigen Verstärkungsstruktur (70) des Wulstes kleiner als oder gleich 45% der radialen Höhe H des Reifens ist.

5. Reifen nach einem der Ansprüche 1 bis 4, wobei in dem Bereich von Abständen r, der im Bereich von 25 bis 45% der Höhe H des Reifens liegt, die Änderung der Dicke $\dfrac{\partial E(r)}{\partial r}$ kleiner als oder gleich 0,3 mm/mm über wenigstens 4% der Höhe H des Reifens ist.

6. Reifen nach einem der Ansprüche 1 bis 5, wobei das Verhältnis $\dfrac{E(r)_{max} - DE}{E(r)_{max}}$ kleiner als oder gleich 7% ist.

**Revendications**

1. Pneumatique comportant :

- deux bourrelets (20) destinés à entrer en contact avec une jante de montage (5), chaque bourrelet comportant au moins une structure annulaire de renforcement (70) ;
- deux flancs (30) prolongeant les bourrelets radialement vers l'extérieur, les deux flancs s'unissant dans un sommet comprenant une armature de sommet (80, 90, 100), surmontée d'une bande de roulement (40) ;
- au moins une armature de carcasse (60) s'étendant depuis les bourrelets à travers les flancs jusqu'au sommet, l'armature de carcasse comportant une pluralité d'éléments de renforcement de carcasse et étant ancrée dans les deux bourrelets par un retournement autour de la structure annulaire de renforcement, de manière à former dans chaque bourrelet un brin aller (62) et un brin retour (63), chaque brin retour s'étendant radialement à l'extérieur jusqu'à une extrémité (64) située à une distance radiale DRR du point (71) radialement le plus à l'intérieur de la structure annulaire de renforcement du bourrelet, la distance radiale DRR étant supérieure ou égale à 7% et inférieure ou égale à 85% de la hauteur radiale H du pneumatique ;
- dans lequel chaque bourrelet comporte un bourrage (110), le bourrage étant situé radialement à l'extérieur de la structure annulaire de renforcement et au moins partiellement entre le brin aller et le brin retour de l'armature de carcasse, le bourrage s'étendant radialement à l'extérieur du point (71) radialement le plus à l'intérieur de la structure annulaire de renforcement du bourrelet jusqu'à une distance radiale DRB dudit point, la distance radiale DRB étant inférieure à 20% de la hauteur radiale H du pneumatique,
- dans lequel chaque bourrelet comporte en outre une bande extérieure (120) placée axialement à l'extérieur de l'armature de carcasse et du bourrage, chaque bande extérieure s'étendant radialement entre une extrémité (121) radialement intérieure de la bande extérieure et une extrémité (122) radialement extérieure de la bande extérieure, l'extrémité (121) radialement intérieure de la bande extérieure étant située à une distance DRI du point (71) radialement le plus à l'intérieur de la structure annulaire de renforcement du bourrelet, la distance radiale DRI étant inférieure ou égale à 20% de la hauteur radiale H du pneumatique, l'extrémité (122) radialement extérieure de la bande extérieure étant située à une distance DRL du point (71) radialement le plus à l'intérieur de la structure annulaire de renforcement du bourrelet, la distance radiale DRL étant supérieure ou égale à 25% de la hauteur radiale H du pneumatique,
- dans lequel le bourrage (110) et la bande extérieure (120) sont réalisés dans une composition caoutchouteuse ayant un module élastique G' inférieur ou égal à 15 MPa et un module visqueux G" tel que :

$$G'' \ [MPa] \leq 0.2 \cdot G' \ [MPa] - 0.2 \ MPa,$$

les modules élastiques et visqueux étant mesurés à 23° C ;
- dans lequel l'ensemble formé par le bourrage (110) et la bande extérieure (120) a une épaisseur E(r), cette épaisseur correspondant à la longueur de l'intersection de la direction (150) perpendiculaire au brin aller (62) de l'armature de carcasse avec ledit ensemble, r désignant la distance séparant l'intersection de ladite direction (150) perpendiculaire au brin aller (62) de l'armature de carcasse avec l'armature de carcasse du point (71) radialement le plus à l'intérieur de la structure annulaire de renforcement, l'allure de l'épaisseur E(r) étant telle que, dans le domaine des distances r comprises entre 25 et 45% de la hauteur H du pneumatique, la variation

de l'épaisseur $\dfrac{\partial E(r)}{\partial r}$ est inférieure ou égale à - 0.25 mm/mm sur au moins 4% de la hauteur H du pneumatique.

**caractérisé en ce que** ladite au moins une structure annulaire de renforcement a une largeur axiale maximale DE telle que le ratio

$$\frac{E(r)_{max} - DE}{E(r)_{max}},$$

où $E(r)_{max}$ est la valeur maxi de l'épaisseur $E(r)$, est inférieur ou égal à 10%.

2. Pneumatique selon la revendication 1, dans lequel la distance radiale DRR est supérieure ou égale à 10% et inférieure ou égale à 20% de la hauteur radiale H du pneumatique.

3. Pneumatique selon la revendication 1 ou 2, dans lequel la distance radiale DRL entre l'extrémité (122) radialement extérieure de la bande extérieure (120) et le point (71) radialement le plus à l'intérieur de la structure annulaire de renforcement (70) du bourrelet, est supérieure ou égale à 40% de la hauteur radiale H du pneumatique.

4. Pneumatique selon l'une quelconque des revendications 1 à 3, dans lequel la distance radiale DRL entre l'extrémité (122) radialement extérieure de la bande extérieure (120) et le point (71) radialement le plus à l'intérieur de la structure annulaire de renforcement (70) du bourrelet, est inférieure ou égale à 45% de la hauteur radiale H du pneumatique.

5. Pneumatique selon l'une quelconque des revendications 1 à 4, dans lequel, dans le domaine des distances r comprises entre 25 et 45% de la hauteur H du pneumatique, la variation de l'épaisseur $\dfrac{\partial E(r)}{\partial r}$ est inférieure ou égale à - 0.3 mm/mm sur au moins 4% de la hauteur H du pneumatique.

6. Pneumatique selon l'une quelconque des revendications 1 à 5, dans lequel le ratio $\dfrac{E(r)_{max} - DE}{E(r)_{max}}$ est inférieur ou égal à 7%.

**FIG. 1**
**(PRIOR ART)**

**FIG. 2**
**(PRIOR ART)**

**FIG. 3**
**(PRIOR ART)**

**FIG. 4**

**FIG. 5**
**(PRIOR ART)**

**FIG. 6**

**FIG. 7**

**FIG. 8**

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010072736 A
- CA 2026024
- US 3949800 A
- WO 0154929 A